# EUROPEAN PATENT SPECIFICATION

(11) **EP 1 046 263 B1**
(45) Date of publication and mention of the grant of the patent: **27.10.2010**
(21) Application number: 98959306.6
(22) Date of filing: 02.11.1998
(51) Int. Cl.: H04L 12/66

(54) **METHOD FOR MANUALLY ROUTING CALLS FROM A FIRST TELECOMMUNICATION NETWORK TO AN EXTERNAL TELECOMMUNICATION NETWORK**
VERFAHREN ZUR MANUELLEN LEITWEGLENKUNG VON EINEM ERSTEN TELEKOMMUNIKATIONSNETZ ZU EINEM EXTERNEN TELEKOMMUNIKATIONSNETZ
PROCEDE POUR ACHEMINER MANUELLEMENT DES APPELS D'UN PREMIER RESEAU DE TELECOMMUNICATIONS VERS UN RESEAU DE TELECOMMUNICATIONS EXTERNE

(30) Priority: 11.11.1997 NO 975174
(43) Date of publication of application: 25.10.2000
(73) Proprietor: Telefonaktiebolaget LM Ericsson (publ), 164 83 Stockholm (SE)
(72) Inventor: ERIKSEN, Werner, N-1440 Drobak (NO); HAGA, Borge, N-0861 Oslo (NO)
(74) Representative: Smedseng, Øyvind
(86) International application number: PCT/NO1998/000330
(87) International publication number: WO 1999/025102

(56) References cited:
- EP-A1- 0 598 969
- EP-A2- 0 603 100
- WO-A1-98/26543
- WO-A1-98/36543
- WO-A2-98/57485
- US-A- 559 855
- US-A- 4 278 844
- US-A- 4 577 066
- COMPUTER SWEDEN, No. 73, November 1996, (SWEDEN), "Billig Internet-Telefoni - Via Vanliga Telefoner", page 12.

## Description

### Field of the invention

The present invention relates to a method for manually routing calls from a terminal in a first telecommunication network, e.g. an intranet to any terminal in an external telecommunication network, the interworking between said networks taking place through one or more interworking units or so called gateways (GW).

More specifically, the present invention relates to addressing gateway types from within a packet network/intranet.

### Prior art and related problems

New emerging standard within video and audio conferencing now makes it possible to have audio and video conferences/calls within PSTN (ISDN) networks, the internet, intranets and Local Area Networks.

Since other network domains now support making audio and video conferences/calls, the need for ways of interworking between these different kind of networks has emerged. These interworking units are called gateways, and they provide the conversions necessary (protocol, audio format, video format etc.) for endpoints/terminals residing in different kind of networks to be able to communicate with each other.

There are no limitations on the number of gateways which can be connected to these networks, which means that an intranet can have access to several gateways in order for a terminal inside the intranet to call e.g. an ISDN video-conferencing terminal. In addition, different gateways are needed for different destinations. E.g. an audio only call to an ordinary POTS telephone would use a different gateway than an audio and video call to an H.320 (ref 2) (ISDN video-conferencing) terminal.

This indicates that a call initiated from within the intranet needs to know what kind of equipment the receiving party is using. This is particularly true for calls to POTS telephones and H.320 terminals (ref 2) since both reside within PSTN network but have different features. POTS telephones support only audio, while H.320 terminals normally support video and data-conferencing as well. This in turn means that the calling party within an intranet/LAN must be able to manually route the call to the correct gateway depending on what kind of equipment the calling party knows that the receiving party outside the intranet/LAN has. This invention suggests a method for manually routing the call to the correct gateway by adding information to the called number.

### Objects of the invention

A main object of the present invention is to propose a way to manually route interworking calls (i.e. over gateways) through the gateway suited for the equipment of the receiving party.

Another object of the present invention is to establish such routing in a simple but expedient manner.

Still another object of the present invention is to handle said routing information at an appropriate location in the routing path.

Further a system and a method for recognizing and routing telephone calls involving hearing or speech impaired persons are known from US 5 559 855. US 4 577 066 discloses a method for selecting an interexchange telephone call carrier selecting a route to the selected carrier and establishing a call path on the selected route to the selected carrier in a multi-carrier environment.

### Brief summary of the invention

The above objects are achieved in a method as stated in the preamble of claim 1, which according to the present invention is **characterized in that** there is added a prefix, given by the caller in the first telecommunication network, to the called number in the external telecommunication network, to inform the routing means or so-called gatekeeper (GK) in the first telecommunication network which type of gateway (GW) is best suited to handle the call depending on the related resource service level.

In an appropriate manner the invention suggest that said routing informing prefix comprises for example a two-digit code.

More specifically, it is according to the invention suggested that said prefix is adapted to inform the routing means (GK) that e.g. audio-only calls should be routed to a gateway suited for audio-only, while calls involving both audio and video should be routed to a gateway suited for calls involving both audio and video.

Further features and advantages of the present invention will appear from the following description of an example of an embodiment taken in conjunction with the enclosed drawing, as well as from the attached patent claims.

### Brief disclosure of the drawings

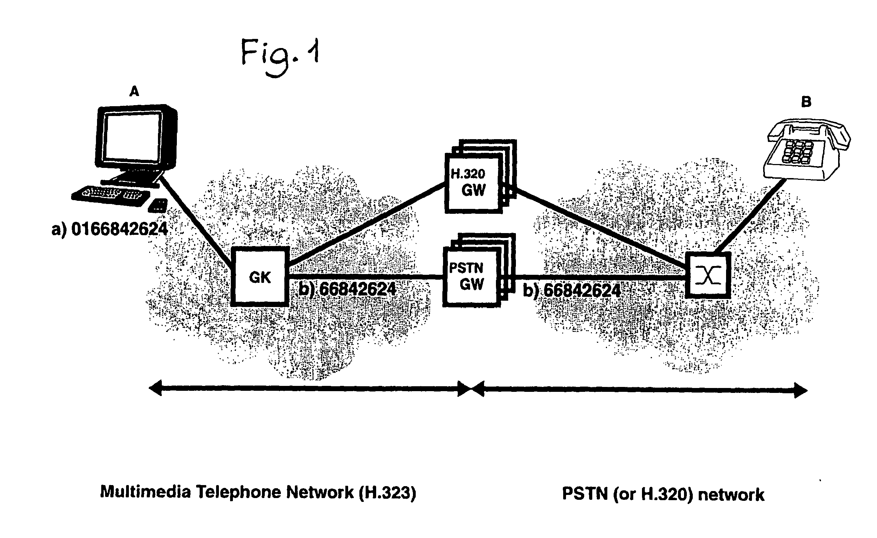

Fig. 1 is a schematical drawing illustrating an embodiment of the method according to the present invention, wherein the routing of calls can take place between a multimedia telephone network and a PSTN (or H.320) network.

### Detailed description of an embodiment

### General description

The invention proposes a way to manually route interworking calls (i.e. over gateways) through the gateway suited for the equipment of the receiving party.

### Description of solution

The solution lies in giving the user an easy way to tell which type of gateway to route the call to. This invention suggests to solve this by adding a prefix to the called number (E.164 address - ref. 3). The user adds a two-digit code in front of the called number telling which type of gateway is best suited to handle calls, e.g. audio-only calls to ordinary POTS telephone should be routed to an H.323 (ref. 1)/PSTN gateway, while an H.320 (ref. 2) call involving both video and audio should be routed to a H.323/H.320 gateway.

Since this is redundant information for the gateway, this prefix will be removed by the gatekeeper before the gatekeeper routes the call to the correct gateway.

Explanation of Fig. 1 where two types of gateways towards PSTN is shown for illustrational purposes:
a) Caller A wishes to call a person outside the intranet with number 66842634. The receiving party is using a POTS telephone. The call must go through the PSTN GW, since the H.320 gateway is based on video-conferencing according to H.320 (ref. 2) and in which case a H.320 terminal is needed on the PSTN side to accept the call.
   The caller dials 0166842634, where 01 is the prefix to make the gatekeeper route the call to the PSTN gateway.
b) The gatekeeper looks at the prefix, sees that this is a PSTN call and routes the call to the PSTN gateway after having stripped off the prefix.

### Advantages

The invention gives the owner of the intranet the possibility to host several types of gateways and still be able to route the calls to the correct type of gateway.

### Broadening

The invention is not limited to the number of gateway types that can be connected from an intranet/LAN (complying to H.323 ref. 1) towards a PSTN network, but rather to how many types of networks can be connected to an intranet/LAN where gateways are needed to support transfer of audio/video/data-calls (e.g. internet, PSTN).

### References

1 ITU-T Recommendation H.323 (1996):"Visual Telephone Systems and Equipment for Local Area Networks which provide a non-guaranteed Quality of Service"
2 ITU-T Recommendation H.320 (1995):"Narrow-band ISDN visual telephone systems and terminal equipment"
3 ITU-T Recommendation E.164 (1991):"Numbering Plan for the ISDN Era"
4 ITU-T Recommendation H.225.0 (1996):"Media Stream Packetization and Synchronization for Visual Telephone Systems on Non-Guaranteed Quality of Service LANs"
5 ITU-T Recommendation Q-931 (1993):"Digital Subscri ber Signalling System No. 1 (DSS1) - ISDN User-Network Interface Layer 3 Specification for Basic Call Control"

## Claims

1. Method for manually routing calls from a terminal (A) in a first telecommunication network, to any terminal in an external telecommunication network, the interworking between said networks taking place through one or more gateways (GW), the routing is performed based on information given by the caller in the first telecommunication network, in an added prefix to the called number in the external telecommunication network, **characterized in that** a routing means, a gatekeeper (GK) in the first telecommunication network is arranged to look at the prefix, determine the type of call and route the call to the type of gateway (GW) which is best suited to handle the call depending on the related resource service level, so that the routing means is adapted to route audio-only calls to a gateway suited for audio-only, and calls involving both audio and video to a gateway suited for calls involving both audio and video.

2. Method as claimed in claim 1, **characterized in that** said routing informing prefix comprises a two-digit code.

3. Method as claimed in claim 1 or 2, **characterized in that** a gateway (GW) suited for audio-only calls is an H.323/PSTN gateway, and that a gateway (GW) suited for both audio and video calls is for example an H.323/H.320 gateway.

4. Method as claimed in any of the preceding claims, **characterized in that** said called number is an E.164 number.

5. Method as claimed in any of the preceding claims, **characterized in that** said prefix added to the called number to choose the most suited gateway (GW), is removed by the gatekeeper (GK) before the gatekeeper (GK) routes the call to the correct gateway (GW).

## Patentansprüche

1. Verfahren zur manuellen Leitweglenkung von Anrufen von einem Endgerät (A) in einem ersten Telekommunikationsnetz zu einem beliebigen Endgerät in einem externen Telekommunikationsnetz, wobei die Zusammenarbeit zwischen den Netzen über ein oder mehrere Gateways (GW) stattfindet, wobei die Leitweglenkung basierend auf Informationen erfolgt, die von dem Anrufer in dem ersten Telekommunikationsnetz angegeben werden, in einer hinzugefügten Vorwahl zu der angerufenen Nummer in dem externen Telekommunikationsnetz, **dadurch gekennzeichnet, dass** ein Leitweglenkungsmittel, ein Gatekeeper (GK), in dem ersten Telekommunikationsnetz angeordnet ist, um die Vorwahl zu untersuchen, die Art des Anrufs zu bestimmen und den Anruf an die Art von Gateway (GW) zu leiten, die am besten geeignet ist, um den Anruf in Abhängigkeit von dem betreffenden Betriebsmittel-Dienstniveau zu handhaben, so dass das Leitweglenkungsmittel dazu geeignet ist, nur Audioanrufe an ein Gateway zu leiten, das nur für Audio geeignet ist, und Anrufe mit sowohl Audio als auch Video an ein Gateway zu leiten, das für Anrufe mit sowohl Audio als auch Video geeignet ist.

2. Verfahren nach Anspruch 1, **dadurch gekennzeichnet, dass** die Vorwahl zur Information über die Leitweglenkung einen zweistelligen Code umfasst.

3. Verfahren nach Anspruch 1 oder 2, **dadurch gekennzeichnet, dass** ein Gateway (GW), das nur für Audioanrufe geeignet ist, ein H.323/PSTN-Gateway ist, und ein Gateway (GW), das für sowohl Audio- als auch Videoanrufe geeignet ist, z.B. ein H.323/H.320-Gateway ist.

4. Verfahren nach einem der vorhergehenden Ansprüche, **dadurch gekennzeichnet, dass** die angerufene Nummer eine E.164-Nummer ist.

5. Verfahren nach einem der vorhergehenden Ansprüche, **dadurch gekennzeichnet, dass** die zu der angerufenen Nummer hinzugefügte Vorwahl zum Wählen des am besten geeigneten Gateways (GW) von dem Gatekeeper (GK) entfernt wird, bevor der Gatekeeper (GK) den Anruf an das richtige Gateway (GW) leitet.

## Revendications

1. Procédé pour acheminer manuellement des appels d'un terminal (A) dans un premier réseau de télécommunications, vers n'importe quel terminal dans un réseau de télécommunications externe, l'interconnexion de réseaux entre lesdits réseaux intervenant à travers une ou plusieurs passerelles (GW), l'acheminement étant effectué sur la base d'informations données par l'appelant dans le premier réseau de télécommunications, dans un préfixe ajouté au numéro appelé dans le réseau de télécommunications externe, **caractérisé en ce qu'**un moyen d'acheminement, un portier (GK) dans le premier réseau de télécommunications, est agencé pour regarder le préfixe, déterminer le type d'appel et acheminer l'appel vers le type de passerelle (GW) qui correspond le mieux à la prise en charge de l'appel en fonction du niveau de service de ressources associé, de sorte que le moyen d'acheminement soit apte à acheminer des appels audio uniquement vers une passerelle appropriée pour l'audio uniquement, et des appels impliquant l'audio et la vidéo vers une passerelle appropriée pour les appels impliquant l'audio et la vidéo.

2. Procédé selon la revendication 1, **caractérisé en ce que** ledit préfixe d'information d'acheminement comprend un code à deux chiffres.

3. Procédé selon la revendication 1 ou 2, **caractérisé en ce qu'**une passerelle (GW) appropriée pour les appels audio uniquement est une passerelle H.323/PSTN, et **en ce qu'**une passerelle (GW) appropriée pour les appels audio et vidéo est par exemple une passerelle H.323/H.320.

4. Procédé selon l'une quelconque des revendications précédentes, **caractérisé en ce que** ledit numéro appelé est un numéro E.164.

5. Procédé selon l'une quelconque des revendications précédentes, **caractérisé en ce que** ledit préfixe ajouté au numéro appelé pour choisir la passerelle (GW) la plus appropriée est enlevé par le portier (GK) avant que le portier (GK) n'achemine l'appel vers la passerelle (GW) correcte.
